# EUROPEAN PATENT APPLICATION

(11) **EP 4 769 366 A1**
(43) Date of publication of application: **01.07.2026**
(21) Application number: 24223845.9
(22) Date of filing: 31.12.2024
(51) Int. Cl.: G09B 5/06, A63F 13/67, G06N 5/022, G09B 7/00, G09B 9/00

(54) **METHOD FOR GENERATING MULTIMEDIA GAMES AND THEIR LAUNCHING SCHEDULE**

(71) Applicant: Yellow House Education S.A., 30-394 Kraków (PL)
(72) Inventor: Miksa, Waldemar, 01-823 Warszawa (PL)
(74) Representative: AOMB Polska Sp. z.o.o.

(57) **Abstract**

The object of the application is a computer-implemented method for generating multimedia games and their launching schedule, in which multimedia game scenarios are made of attributes stored in advance in a database, using a genetic algorithm and deep neural networks, wherein said genetic algorithm is implemented using a bidirectional neural network of the Long Short-Term Memory type, LSTM.

The object of the application is also a system for generating multimedia games, said system being configured and programmed to implement the method according to the application.

## Description

The object of the invention is a computer-assisted method for generating multimedia games and their launching schedule used for educational purposes, in particular for studying foreign languages.

Patent application EP3211622A1 presents a system for conducting training, teaching or educational sessions. The user can access the content presented by the system through a dedicated interface, through which they communicate with the system software and databases, installed on another computer, or with other users. In the teaching process, the invention uses elements of gamification (such as scoring, behavioral options derived from games), which are to make the process more attractive and increase the involvement and productivity of users.

Document US20190244127A1 discloses a teaching system comprising software consisting of learning, gamification and interaction engines coupled to databases, storing data on, among others, the users' interactions with the system, or teaching material. The system is able to present data in a form that includes game elements in order to make the learning process and the user's interaction with the system more attractive. By means of machine learning modules, the disclosed invention analyses the user's learning style and feedback, logical, semantic and other connections as well as intra- and inter-base relationships between data elements in order to provide a new set of teaching data and feedback after a given step in the process. The application also mentions the use of genetic machine learning algorithms or neural networks or deep learning networks to analyse encoded data related to material for teaching or originating from interaction with the user.

Document US2023080674A1 discloses a system, a method and apparatus for automatically generating text items that may be used on tests or exams. The method comprises obtaining an instruction, a set of examples and conditions, processing the above by deep learning models (using a Transformer-based Language Model, such as, for example, the Generative Pretrained Model 3-GPT-3) and generating several initial source passages of texts, evaluating and selecting the source passages, selecting a test passage, identifying attributes associated with the test passage, assigning values thereto, creating alternative source passages and assigning attributes/values thereto, generating a multiple-choice question and sets of correct and incorrect responses, and evaluating the generated proposals in terms of the provided responses, and finally constructing a test question item based on the performed analysis.

Document CN118396207A discloses a personalised learning path planning method based on a personalised learning recommendation algorithm, consisting of: collecting basic data of the learner from a learning platform available online, establishing a learner figure according to selected key features (analysed using, among others, a deep learning model), determining a further learning path direction based on data processed by the recommendation algorithm, preparing learning content for the learner based on an analysis of data such as data acquisition performance, the learning model, emotional predispositions, and adjustment of the further learning path direction in real time based on the operation of the abovementioned algorithm.

However, the documents presented above do not comment on the level of mastery of the knowledge which the user would be able to achieve in the context of the timeframe in which a given learning step takes place. Consequently, the inventions described do not provide clear grounds for activities that minimise the time required to achieve a certain level of mastery of the teaching material. An optimal solution to this problem was found possible due to the use of a genetic algorithm working based on neural networks built using bidirectional neural cells of the *Long Short-Term Memory* type (LSTM) to analyse the user's knowledge, the preparation of teaching material in the form of a multimedia game with a specific scenario, playing it, and analysing the feedback.

The solution according to the present invention makes it possible to simultaneously achieve a certain level of mastery of the teaching material, and at the same time to minimise the amount of data-and thus also the consumption of memory resources in devices, or a busy connection-required to carry out the teaching process.

For example, if the games necessary to master the teaching material to an assumed degree are stored on a hard disk in a stationary device, a minimum amount of hard disk space will be required to store the games with scenarios generated by the method according to the present invention.

For example, if the games necessary to master the teaching material to an assumed degree are stored on a network drive, a minimum amount of network drive space will be required to store the games with scenarios generated by the method according to the present invention.

For example, if the games necessary to master the teaching material to an assumed degree are stored on a portable drive, a minimum amount of portable drive space will be required to store the games with scenarios generated by the method according to the present invention.

Optionally, if the teaching process is carried out using data transfer, the solution according to the invention makes it possible to minimise the duration of having a busy connection due to reduction in the amount of data required for transmission.

For example, if games with scenarios generated by the method according to the present invention are downloaded and stored on a disk (hard or portable), theirtransfer will exert minimum load on transmission networks.

For example, if games with scenarios generated by the method according to the present invention are played by means of audio streaming, their transfer will exert minimum load on transmission networks, and launching them on an end device will require minimal main memory resources.

For example, if games with scenarios generated by the method according to the present invention are played by means of video streaming, their transfer will exert minimum load on transmission networks, and launching them on an end device will require minimal main memory resources.

For example, if games with scenarios generated by the method according to the present invention are played as online games, their transfer will exert minimum load on transmission networks, and launching them on an end device will require minimal main memory resources.

This is because games with scenarios generated by the method according to the present invention will have the minimal possible volume (measured in MB) that ensures mastery of the material at least to the specified degree.

The essence of the invention is a computer-implemented method for generating multimedia games and their launching schedule, generating multimedia game scenarios that are made of attributes stored in advance in a database, comprising the steps of:
a) providing data describing the scenarios of the last n multimedia games launched by the user, where n is a pre-set positive integer, as input data for the genetic algorithm,
b) providing data describing assessment of the user's knowledge once the user has launched the last n multimedia games, as input data for the genetic algorithm,
c) filtering the input data indicated in steps a) and b) by the genetic algorithm, until the output of the genetic algorithm produces a recommended set of attributes for the multimedia game, wherein these attributes are selected from the attributes stored in advance in said database, a recommended degree of mastery of the material, and a recommended launching schedule involving at least a multimedia game whose scenario comprises said recommended set of attributes,
d) generating the multimedia game by incorporating the recommended set of attributes obtained in step c) into the scenario of this game,
e) saving the game generated in step d) in said database, preferably along with the launching schedule for this game generated in step d) and/or with the recommended degree of mastery of the material generated in step d),
f) launching the multimedia game according to the schedule obtained in step d), preferably on a server or on a user terminal.

Preferably, the method according to the invention is characterised in that the scenario attributes stored in the database are connected based on meanings, grammatical and syntactic relations or tags (markers).

Preferably, the method according to the invention is characterised in that the scenario attributes stored in the database comprise the type of the scenario, the location of the scenario, locations occurring in the scenario, the main template, phrases occurring in the scenario, words, sentences, items, actors and/or roles.

Preferably, the method according to the invention is characterised in that the teaching material is designed as a topic map in the form of a graph using a decision tree algorithm, said topic map being supplemented by a rating model assigning scores to the topics to reflect the degree of the user's mastery of a topic.

Preferably, the method according to the invention is characterised in that the data provided in step (a) as input data for the genetic algorithm comprise recommended topics for the next scenario, and they are the output data of a deep neural network of the LSTM type, generated based on the input data, which are the data describing the scenarios of the last n multimedia games launched by the user, taken from the database.

Preferably, the method according to the invention is characterised in that the data provided in step b) as input data for the genetic algorithm comprise data from a neural network for assessing the user's state of knowledge, assigning a score to a given material to reflect the degree of the user's mastery of the material.

Preferably, the method according to the invention is characterised in that the neural network for assessing the user's state of knowledge assigns to the topic a score which is a real number within a range of 0 to 6, wherein a score below 1 indicates a negligible degree of mastery (unfamiliarity) of the material by the user, a score above 5 indicates an excellent degree of mastery of the material by the user (the user has mastered the material correctly in all contexts), whereas a score between 1 and 5 indicates a moderate degree of mastery of the material by the user (the user has mastered the material, but to different degrees depending on the context).

Preferably, the method according to the invention is characterised in that the data provided in step b) as input data for the genetic algorithm comprise data from a deep learning network model for examining the user's learning trend over time, which are vectors of the descriptors of the characteristic features of a given user, reflecting the current degree of mastery of the material by the user.

Preferably, the method according to the invention is characterised in that the hyperparameters of the genetic algorithm for generating game scenarios comprise a number of iterations of no less than 10, a population of no less than 100, a crossover value of no less than 0.9, and a mutation value of no less than 0.1.

Preferably, the method according to the invention is characterised in that the genetic algorithm is activated based on a neural network with at least one layer of the *Long Short-Term Memory type,* LSTM, with a number of neurons in the layer of no less than 16, additionally comprising a fully-connected layer in which the number of neurons is equal to the number of inputs into the network.

Preferably, the method according to the invention is characterised in that the deep learning network model for studying the user's learning trend over time comprises a neural network with at least one layer of the *Long Short-Term Memory type,* LSTM, with a number of neurons in the layer of no less than 16, additionally comprising a fully-connected layer in which the number of neurons is equal to the size of the descriptor. Preferably, the method according to the invention is characterised in that recommendation of topics for consecutive scenarios proceeds with the use of a neural network with at least one layer of the *Long Short-Term Memory* type, LSTM, with a number of neurons in the layer of no less than 16, additionally comprising a fully-connected layer in which the number of neurons is equal to the number of words on the topic map.

Preferably, a system for generating multimedia games with scenarios made of attributes stored in advance in a database and launching schedules for these multimedia games comprises:
a) a database containing attributes stored in advance,
b) a bidirectional neural network of the *Long Short-Term Memory* type, LSTM, for implementing the genetic algorithm,
c) preferably, a server or a user terminal,
wherein said system is configured and programmed to implement the method according to each of the abovementioned options.

The embodiment of the invention is shown on the drawing, in which the individual figures present:
Fig. 1-a part of a topic map showing links between grammatical groups,
Fig. 2-a player's heat map of topics,
Fig. 3-division of the area of topics for the selected player into 5 areas which indicate the degree of mastery of the teaching material, generated through the use of random forests.

### An exemplary embodiment of the method according to the invention

Data describing the scenarios of n most recent games played by the user are used as input material for the genetic algorithm, where n is a pre-set integer. Preferably, n is a number with set upper limit to avoid overtraining the algorithm and set lower limit, so as to provide as much data as possible.

The data describing the scenarios preferably comprise a list of known words and phrases divided into attributes to which these data have been assigned. The attributes used in these scenarios, and according to which the vocabulary on the topic map is organised, are supplemented by links between them, and by a numerical score value reflecting the user's degree of mastery. The list of words or phrases is sorted in a descending order according to the value of the score assigned to the topic.

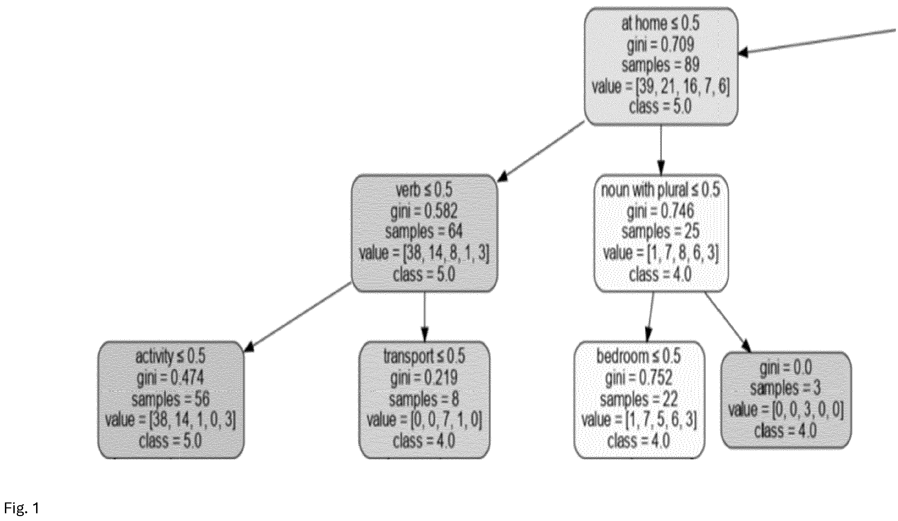

The topic map comprises layers represented as graphs, the development of which uses a decision tree algorithm, describing links between the topics. Fig. 1 shows a part of a topic map in the form of a tree, showing links between the grammatical groups of the topics.

The scenario attributes comprise: semantic categories and subcategories, actors, roles assigned to actors, scenario location, and the grammatical category.

Semantic categories comprise: animals, animal body parts, locations, colours, furniture, vegetables, food, toys, activities, fruit, weather, family, items, celebrations, meals, clothes, senses, creatures, places, birds, time, body, nature, music, occupations, transport, body, emotions, games, characteristic features, numbers, home, insects, kitchen, bathroom, farm animals, wild animals, people, playgrounds, animal sounds, garden, and seashore.

For example, the semantic category of 'animals' contains semantic subcategories such as 'farm animals', 'wild animals', 'birds', 'insects', 'animal body parts', 'animal sounds', and 'locations' where animals occur.

Words belonging to different grammatical categories are assigned to a single semantic category; for example, verbs in finite and infinite forms such as 'run', 'walk', 'splash', 'watch', 'stop', 'help', and prepositions of movement such as 'down' or 'up'/'upwards' are comprised in the 'activity' category.

Preferably, the 'location' attribute comprises names of places, for example: 'house', 'garden', 'sea', 'beach', 'park', 'playground', 'cave', 'bathroom', 'kitchen', 'shop', 'bedroom', 'farm', 'forest', 'zoo', as well as positioning terms in relation to something, for example 'everywhere', 'indoors', 'outdoors'.

The 'actors' attribute comprises all human, animal and fantasy characters appearing in game scenarios, like for example: 'Zoom', 'Tick Tock', 'Daddy Tick Tock', 'Mama Tick Tock', 'Splish Splash', 'Ring Ring', 'Mama Ring Ring', 'Daddy Ring Ring', 'Tom', 'Keri', 'Granny', 'old man', 'cat', 'dog', 'bird', 'frog', 'fly', 'worm', 'sun', 'cloud', 'butterfly', 'cow', 'pig', 'farmer', 'duck', 'earthworm', 'squirrel', 'rabbit', 'fish', 'bear', 'hedgehog', 'mole', 'mouse', 'owl', 'little panda', 'little panda's brother', 'little panda's mum', 'little panda's dad', 'little panda's grandma', 'little panda's sister', 'spider', 'bee', 'rooster', 'monkey', 'moon', 'red ball', 'blue ball', 'yellow ball', 'guard', 'clown', 'beetle', 'snail', 'shop assistant', 'baker', 'cook', 'doll', 'teddy bear', 'tortoise', 'crab', 'pirate', 'soldier', 'woman', 'girl', 'bus driver', 'pilot', 'Father Christmas'.

The 'roles assigned to actors' attribute preferably comprises the roles of characters who speak in the games, and the roles of characters with only passive participation in the games.

The 'scenario location' attribute preferably comprises, among others, 'playground', 'children's room', 'house', 'garden', 'shop', 'farm', 'tree', 'meadow', 'dirt road', 'pond', 'valley', 'railway station', 'hat shop', 'bakery in the park', 'clearing', 'seashore', 'picture book', 'sea', 'island', 'bus stop', 'car', 'theatre', 'bathroom', 'airport', 'airspace'.

The 'grammatical category' attribute comprises, among others, 'phrase', 'verb', 'noun', 'adjective', 'possessive adjective'.

Such way of mapping the user's lexical knowledge provides systematicity in describing the knowledge, taking into account links between its individual elements on the one hand, and capturing the syntactic relations-in sentences or contexts of occurrence of given elements in larger text structures-on the other hand.

A score in numerical form is assigned to each element of the user's lexical knowledge, to reflect the degree of the user's mastery of the element of lexical knowledge (word or phrase).

Numbers expressing assessment of the degree of the user's mastery of an element of lexical knowledge range from 0 to 6. Preferably, the scores are presented in the form of real numbers rounded to one digit after the decimal separator.

A score expressed by a number of less than 1 indicates that the user is unfamiliar with a given word or phrase. A score expressed by a number ranging from 1 to 5 indicates an incomplete level of knowledge of the word or phrase, where knowledge of the word or phrase varies depending on context. The higher the value of the score, the better the user's knowledge of a given topic. A score expressed by a number of more than 5 indicates a given user's perfect knowledge of a given word or phrase in all semantic contexts.

A score reflecting the degree of the user's mastery of an element of lexical knowledge is assigned by the rating model, and recorded next to a given element on the topic map. This procedure allows for providing a description of the user's state of knowledge that is 85% accurate from a linguistic point of view.

The rating model has a neural network structure that comprises no less than four neural layers of the fully-connected type, with the ReLU activation type, for which the MSE cost function is used (Mean Squared Error).

The abovementioned network is trained based on the SGD algorithm, also using the Adam optimiser. The use of ReLU layers results in assuming absolute values only, but aggregation only was used for the output due to the necessity to present a full output range, constituting assessment of mastery of a given topic.

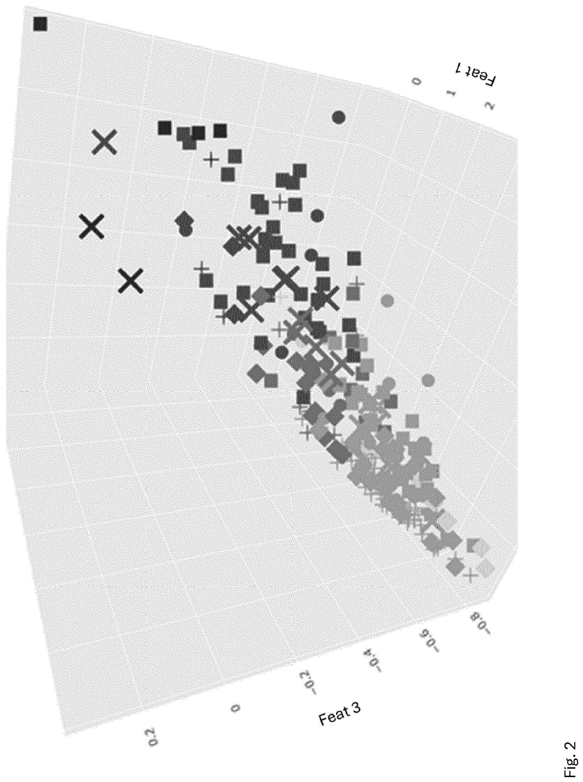

A user's heat map of topics is prepared based on the player's topic map and on the basis of the scores contained therein, which are assigned by the rating model. Fig. 2 presents a partial heat map of the user's topics. This is a graph in 3D form, where the coordinate axes are 'grammatical similarity', 'semantic similarity', and 'assessment of the degree of the user's familiarity with the topic'. The tag of a given topic has the same shape as the tags of other topics assigned to an identical grammatical group. Assessment of the degree of familiarity with a topic is shown in the form of a tag colour-the warmer the colour, the better the user's mastery of the topic. The cloud of topic tags is ordered from best to worst mastered. In addition, proximity of the position of two tags on the graph reflects their semantic similarity. A description of the status of the user's knowledge presented in this manner provides indication as to which topics require additional repetition, and which ones are well orverywell mastered. In orderto better learn the poorly studied topics, construction of the next scenario primarily uses those topics which lie as close as possible to the poorly studied topic on the heat map (especially semantically, but also grammatically), and at the same time are much better studied.

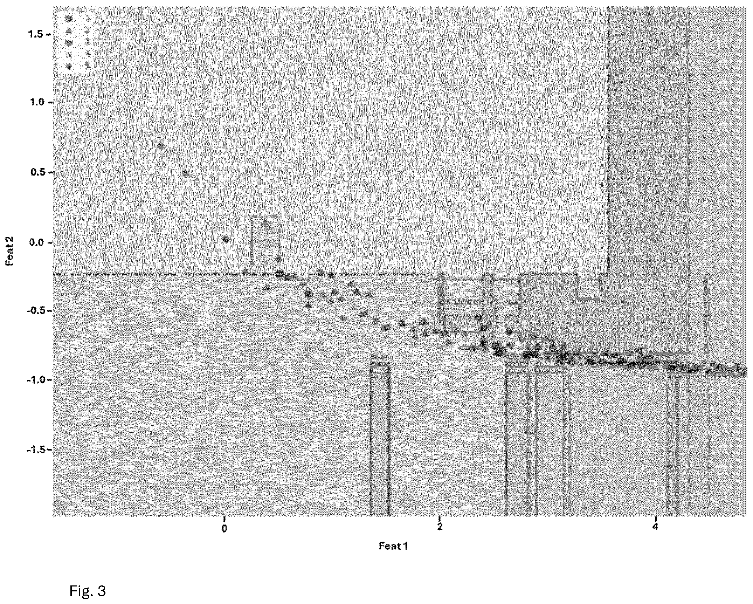

As a complement to the heat maps, the method also uses random forests of topics for the user. Fig. 3 shows an example of an area chart of a topic map, and a topic cloud for the user superimposed thereover. The random forests divide the topic map into five areas, which indicate the degree of mastery of the teaching material, and allow for the identification of additional relationships between the topics.

The model studying the user's learning trend over time operates based on the data assigned to topics on the map, and on the output data of a scenario generator. This model assumes the topic map as data, analyses the attributes contained in a given scenario, compares changes in the scores for learning the topics from the topic map occurring after playing the game according to a given scenario, and determines user-specific descriptors based on these data. Descriptors are vectors reflecting the current process of mastering the topics by the user. Functionalities of collaborative filtering are determined by comparing user descriptors. This allows for studying other users' learning paths, and for identifying the paths of approach towards issues that a given user finds difficult. A study of other users' similar learning paths for a topic in relation to the reference one allows for obtaining more tailored recommendations.

The model which studies the user's learning trend over time works based on a deep learning network consisting of bidirectional neural cells of the *Long Short-Term Memory* type (LSTM). This network consists of no less than four layers made of bidirectional neural cells of the *Long Short-Term Memory* type (LSTM), in which the number of units is no lower than 16, and at least one layer of the 'fully-connected' type, with a number of neurons equal to the size of the descriptor.

The genetic algorithm in relation to scenario scheduling examines the degree of adaptation of the material in the context of the results from the rating model, and the model studying the student's learning trend, and adjusts the schedule.

The scenario generator uses elements of the Reinforcement Learning algorithm and constructs game scenarios from attributes, so as to choose a certain area or topic group from the topic map, so that at least one attribute requiring training is found among several attributes that are at least well or moderately known by the user. Such constitution of topics in the scenario, along with selection of sequences for transitioning between attributes while playing the game allows the user to transition between topics and learn new topics while minimising the resources (memory, data transfer) used to achieve this objective.

The scenario generator additionally comprises the use of genetic algorithms to conduct a study of the entire material learned by the user in several iterations, in such a way as to generate a new set of topics. The input for the genetic algorithm is constituted by a set of coded features that describe the teaching material. The adaptation function is based on an assessment developed by the rating model, the properties of which were examined during the topic mapping step. The hyperparameters of the genetic algorithm are as follows: number of iterations-10, population-100, crossovervalue-0.9, and mutation value-0.1.

Further, deep neural networks made of bidirectional neural cells of the *Long Short-Term Memory* type (LSTM) are used for the generation of scenarios. The abovementioned networks comprise at least four neural layers consisting of a minimum of sixteen units each, and at least one layer of the fully-connected type, in which the number of neurons equals the number of inputs into the network.

The task of the developed scenario generator is to predict the consecutive topics in the scenario. Not only does the generator learn to draw conclusions from the received outputs, but it aims to produce the correct result via verification, based on backpropagation of the signal. The network receives the last n encoded scenarios as input, and on this basis it determines recommended topics for the next scenario. The use of the structure described above makes it possible to study links between topics arranged in the form of a time series, in which each time step reflects the learner's state of knowledge. Said network is trained for 20 epochs with the SGD algorithm, where the sample size is 16. The model is assisted by an early stop mechanism that prevents the network from overtraining. Network training is supported by the Adam optimiser. A loss function is used in the form of the MSE (Mean Squared Error).

A game generated from a scenario generated in advance is saved in the database along with the launching schedule and/or with the recommended level of mastery of the material.

For a generated set of 6 scenarios labelled t-5, t-4, t-3, t-2, t-1 and t, scores for each element (word or phrase) are provided along with the average value of scores for the whole scenario, which is the arithmetic mean of all scores in a given scenario. For example, for user 1, scores for each element of scenario t-5 are shown in brackets: Scenario t-5: car (4.4), fast (5.1), go (2.0), my (3.7), total score [3.8]

At the same time, each scenario has been given categories to which individual elements occurring in the scenario are assigned. For example, for the above scenario t-5, the categories are shown on the list: ['toys', 'activity', 'item', 'transport', 'characteristics']

The scenario relates to an episode of the Baby Beetles course entitled: *'My car goes* fast'. A score of 3.8 means that the material of this episode has been mastered by user 1 to a satisfactory degree. Differences in the scores of the individual elements mean that the word *'fast'* belonging to the *'characteristics'* category has been mastered to a very good degree, whereas the word '*go*' belonging to the *'activity'* category-to a satisfactory but lesser degree, and it should be presented to the learner in one of the following scenarios, although preferably in a different context.

The remaining scenarios t-4-t-1 were assigned the following values for user 1: 1.9; 2.4; 3.8; 2.5. This means that user 1 has mastered the lexical material to a varying degree, with scores for individual elements having values from 1.3 to 5.1. Elements of the user's knowledge system mastered to a high degree (the user recognises them correctly regardless of the context of occurrence) can provide a good basis for introducing new vocabulary, or for re-presentation of vocabulary that has not yet been mastered to a high degree (it is only recognised in certain contexts).

Scenario t for user 1 includes both elements with high scores, here: 4.7 to 5.0, and elements with low scores, here: 1.5. The average score for the entire scenario t is 3.1. This indicates the presence of elements that are well and very well recognised by user 1 in scenario t, and provides a good basis for consolidating lexical knowledge with respect to elements that are less recognised. Too high number of known elements would not benefit user 1, as they do not need additional repetitions in any of the contexts. Too high number of poorly and very poorly recognised elements would not be beneficial to user 1 either, as the lack of elements forming a linguistic context familiar to user 1 could considerably hinder their understanding and memorising of new elements. Further, a score well below 3.0 indicates the presence of too many elements not recognised correctly by user 1 in the scenario, whereas a score well above 3.0-the presence of too many elements already known to user 1 well enough. It should be assumed that a scenario t score which is close to 3.0 means that the proportion of elements well and poorly known to user 1 is optimal.

A similar situation occurred for user 2, for whom the scenario t score was 3.0. For user 3 on the other hand, the scenario t score was 2.4, which indicates too many elements that are less recognised, whereas for user 1 it was 4.3, which in turn indicates too many elements that are well recognised. An in-depth analysis of scenarios t-5 to t-1 for users 2 and 3 showed that the lexical knowledge of user 2 was better (the arithmetic mean of the scores for scenarios t-5-t-1 for this user is almost 3.0) than the knowledge of user 3 (the arithmetic mean of the scores for scenarios t-5-t-1 for this user is 2.7). Differences in the average values of the scenario t scores for users 2 and 3 are due to varying mastery of the lexical material. For user 2, the average value of the scenario t score could not be lower because said user had mastered too many words to a high and very high degree, whereas for user 3 it could not be higher because, unlike user 2, user 3 had mastered too few words to a high and very high degree. Based on the available data, it can be assumed that the level of accuracy of the scenario generation system in optimising the selection of user content from the topic map is at least at the assumed value of 80%.

The words recommended for learning by a given user are derived directly from the state of user's lexical knowledge, which is described in the form of a topic map system. Depending on the state of knowledge of a given user-on how the scores for the individual elements of this knowledge system correspond to the individual attributes of the description-the scores for the words recommended for learning may have different values, but they should always oscillate around the lowest values achieved by the given user. For example, if a given user has mastered the assumed range of vocabulary at an average level of about 3.0, and the values of individual elements range from 1.0 to 5.0, the system should recommend to this user the words that have not yet been mastered at a high enough level. The recommended words should have low score values, e.g. between 1.0 and 2.5, or even below 1.0 (brand new words that a given user does not yet recognise). On the other hand, if a given user has mastered mostwords at a level of above 3.0 (within a range between 3.0 and 5.0), then some of the recommended words should have higher values and some should oscillate in the lower value range, i.e. between 2.0 and 3.0.

## Claims

1. A computer-implemented method for generating multimedia games and their launching schedule, in which multimedia game scenarios are made of attributes stored in advance in a database, using a genetic algorithm and deep neural networks, comprising the steps of:
a) providing data describing the scenarios of the last n multimedia games launched by the user, where n is a pre-set positive integer, as input data for the genetic algorithm,
b) providing data describing assessment of the user's knowledge once the user has launched the last n multimedia games, as input data for the genetic algorithm,
c) filtering the input data indicated in steps a) and b) by the genetic algorithm, until the output of the genetic algorithm produces a recommended set of attributes for the multimedia game, wherein these attributes are selected from the attributes stored in advance in said database, a recommended degree of mastery of the material, and a recommended launching schedule involving at least a multimedia game whose scenario comprises said recommended set of attributes,
d) generating the multimedia game by incorporating the recommended set of attributes obtained in step c) into the scenario of this game,
e) saving the game generated in step d) in said database, preferably along with the launching schedule for this game generated in step d) and/or with the recommended degree of mastery of the material generated in step d),
f) launching the multimedia game according to the schedule obtained in step d), preferably on a server or on a user terminal,
wherein said genetic algorithm is implemented using a bidirectional neural network of the *Long Short-Term Memory type,* LSTM.

2. The method according to claim 1, **characterised in that** the scenario attributes stored in the database comprise meaning-based connections, connections based on grammatical and syntactic relations and/or connections based on tags (markers).

3. The method according to claim 1 or 2, **characterised in that** the scenario attributes stored in the database comprise the type of the scenario, the location of the scenario, locations occurring in the scenario, the main template, phrases occurring in the scenario, words, sentences, items, actors and/or roles.

4. The method according to claim 1, 2 or 3, **characterised in that** the teaching material is designed as a topic map in the form of a graph using a decision tree algorithm, said topic map being supplemented by a rating model assigning scores to the topics to reflect the degree of the user's mastery of a topic.

5. The method according to claim 1, 2, 3 or 4, **characterised in that** the data provided in step (a) as input data for the genetic algorithm comprise recommended topics for the next scenario, and they are the output data of a deep neural network of the LSTM type, generated based on the input data, which are the data describing the scenarios of the last n multimedia games launched by the user, taken from the database.

6. The method according to claim 1, 2, 3, 4 or 5, **characterised in that** the data provided in step b) as input data for the genetic algorithm comprise data from a neural network for assessing the user's state of knowledge, assigning a score to a given material to reflect the degree of the user's mastery of the material.

7. The method according to claim 6, **characterised in that** the neural network for assessing the user's state of knowledge assigns to the topic a score which is a real number within a range of 0 to 6, wherein a score below 1 indicates a negligible degree of mastery (unfamiliarity) of the material by the user, a score above 5 indicates an excellent degree of mastery of the material by the user (the user has mastered the material correctly in all contexts), whereas a score between 1 and 5 indicates a moderate degree of mastery of the material by the user (the user has mastered the material, but to varying degrees depending on the context).

8. The method according to any one of claims from 1 to 7, **characterised in that** the data provided in step (b) as input data for the genetic algorithm comprise data from a deep learning network model for examining the user's learningtrend over time, which are vectors of the descriptors of the characteristic features of a given user, reflecting the current degree of mastery of the material by the user.

9. The method according to any one of claims from 1 to 8, **characterised in that** the hyperparameters of the genetic algorithm for generating game scenarios comprise a number of iterations of no less than 10, a population of no less than 100, a crossover value of no less than 0.9, and a mutation value of no less than 0.1.

10. The method according to any one of claims from 1 to 9, **characterised in that** the genetic algorithm is activated based on a neural network with at least one layer of the *Long Short-Term Memory* type, LSTM, with a number of neurons in the layer of no less than 16, additionally comprising a fully-connected layer in which the number of neurons is equal to the number of inputs into the network.

11. The method according to claims 1 to 10, **characterised in that** the deep learning network model for studying the user's learning trend over time comprises a neural network with at least one layer of the *Long Short-Term Memory* type, LSTM, with a number of neurons in the layer of no less than 16, additionally comprising a fully-connected layer in which the number of neurons is equal to the size of the descriptor.

12. The method according to any one of claims from 1 to 11, **characterised in that** recommendation of topics for consecutive scenarios proceeds with the use of a neural network with at least one layer of the *Long Short-Term Memory* type, LSTM, with a number of neurons in the layer of no less than 16, additionally comprising a fully-connected layer in which the number of neurons is equal to the number of words on the topic map.

13. A system for generating multimedia games with scenarios made of attributes stored in advance in a database and a launching schedule for these multimedia games, comprising:
a) a database containing attributes stored in advance,
b) a bidirectional neural network of the *Long Short-Term Memory* type, LSTM, for implementing the genetic algorithm,
c) preferably, a server or a user terminal,
wherein said system is configured and programmed to implement the method according to any of the above claims.
